Europäisches Patentamt

European Patent Office

Office européen des brevets

(19)

(11) **EP 1 045 259 B1**

(12) **FASCICULE DE BREVET EUROPEEN**

(45) Date de publication et mention
de la délivrance du brevet:
**17.09.2003 Bulletin 2003/38**

(51) Int Cl.[7]: **G01V 1/28**

(21) Numéro de dépôt: **00400920.5**

(22) Date de dépôt: **03.04.2000**

(54) **Méthode pour obtenir un modèle optimal d'une caractéristique physique dans un milieu hétérogène, tel que le sous-sol**

Verfahren zur Erzeugung eines optimalen Modells, repräsentativ für eine physikalische Kenngrösse in ein heterogenes Medium, insbesondere für den Untergrund

Method of obtaining an optimal model of a physical characteristic in a heterogeneous medium, and particularly the subsoil

(84) Etats contractants désignés:
**DK GB IT NL**

(30) Priorité: **16.04.1999 FR 9905288**

(43) Date de publication de la demande:
**18.10.2000 Bulletin 2000/42**

(73) Titulaire: **Institut Français du Pétrole**
**92852 Rueil-Malmaison Cedex (FR)**

(72) Inventeurs:
- **Fournier, Frédérique**
  **95240 Cormeilles en Parisis (FR)**
- **Royer, Jean-Jacques**
  **54000 Nancy (FR)**

(56) Documents cités:
| | |
|---|---|
| EP-A- 0 889 331 | EP-A- 0 911 652 |
| EP-A- 0 923 051 | US-A- 4 972 383 |
| US-A- 5 321 613 | US-A- 5 416 750 |

- BERLIOUX A: "validation and update of 3-D velocity models by inversion of seismic and well-log data" AVAILABLE FROM INTERNET: HTTP://SEPWWW.STANFORD.EDU/PUBLIC/DOCS/SEP 92/TOC_HTML/INDEX.HTML, XP002126635 22-dec-1999
- INGGS M R ET AL: "INTERPOLATING SATELLITE DERIVED WIND FIELD DATA USING ORDINARY KRIGING, WITH APPLICATION TO THE NADIR GAP" IEEE TRANSACTIONS ON GEOSCIENCE AND REMOTE SENSING,US,IEEE INC. NEW YORK, vol. 34, no. 1, page 250-256 XP000588935 ISSN: 0196-2892

## Description

La présente invention concerne de façon générale une méthode pour obtenir un modèle optimal d'une caractéristique physique dans un milieu hétérogène.

La méthode selon l'invention permet notamment de modéliser l'impédance d'une zone souterraine relativement à des ondes qui s'y propagent, et d'obtenir par là une image du sous-sol où les discontinuités génératrices de ces variations d'impédance, sont localisées plus précisément. Elle trouve des applications notamment pour faciliter la localisation de gisements d'hydrocarbures.

## Etat de la technique

Il est bien connu à l'heure actuelle que la précision et la fiabilité d'un modèle de réservoir dépend beaucoup d'une intégration de données compatibles mais de nature différentes, plus ou moins reliées aux propriétés d'un gisement étudié. De nombreuses études ont par exemple démontré le rôle que peuvent jouer les données sismiques pour contraindre l'image d'un réservoir dans les espaces compris entre les puits qui y sont forés.

Une stratégie courante pour intégrer des données sismiques dans un modèle de réservoir consiste à estimer les impédances acoustiques ou élastiques à partir des amplitudes sismiques et ensuite à les traduire en propriétés du réservoir.

Parmi les algorithmes d'inversion les techniques exploitant un modèle a priori demandent le choix de paramètres qui pondèrent les influences respectives des données et de ce modèle a priori dans l'optimisation.

Par les brevets EP 354.112 (US 4,972,383) et EP 889.331 du demandeur, on connaît une méthode dite méthode Interwell® pour obtenir un modèle à au moins deux dimensions représentant les variations de l'impédance acoustique d'une zone souterraine par exemple, qui s'accorde au mieux avec des données connues déduites d'observations ou de mesures: données géologiques, données sismiques après sommation, autres données obtenues dans un ou plusieurs puits traversant cette zone, etc. Elle comporte la construction d'un modèle d'impédance a priori en combinant des données de puits et des informations structurales ou stratigraphiques connues, notamment par krigeage des impédances connues le long des puits en suivant les surfaces de corrélation, à l'intérieur des unités stratigraphiques. Les horizons sismiques donnent la géométrie de ces unités stratigraphiques et les corrélations sont faites en suivant les surfaces définies en accord avec le mode de dépôt (concordant, parallèle au toit ou au mur). La distribution initiale d'impédance entre les puits est ensuite mise à jour en tenant compte des amplitudes sismiques relevées. Ceci est réalisé itérativement par la minimisation d'une fonction-coût à deux termes :

- $$F = F_s + F_g,$$

où :

- $F_s$ est un terme sismique défini comme une certaine norme norme représentative de l'écart entre les traces synthétiques obtenues à partir du modèle et les amplitudes des traces sismiques réelles : traces avant sommation (pre-stack) traces après sommation (post-stack), etc., et

- $F_g$ est un terme géologique mesurant l'écart entre le modèle a priori et le modèle courant.

Le modèle d'impédance optimal (optimisé) est un compromis entre les deux termes dépendant de leurs poids respectifs. Ces poids sont en relation avec les paramètres d'inversion c'est-à-dire, pour $F_s$, avec le rapport du signal au bruit et, pour $F_g$, en relation avec la longueur de corrélation $\lambda$ et la variance $\sigma^2$ de l'erreur sur le modèle a priori, en formant l'hypothèse que cette erreur est une variable aléatoire avec une covariance exponentielle stationnaire de variance $\sigma^2$ et de longueur de corrélation $\lambda$.

Habituellement, on estime le poids de $F_s$ à partir des amplitudes réelles. Inversement la longueur de corrélation $\lambda$ et l'écart-type $\sigma$ sont définis par l'utilisateur selon le degré de confiance qu'il peut avoir dans le modèle a priori. Cependant, il ne faut pas que ce dernier point soit évalué de façon trop heuristique car la confiance que l'on a du modèle a priori dépend de la qualité des données, du nombre et de l'emplacement des puits, et aussi du comportement spatial du champ d'impédance.

## Définition de l'invention

La méthode selon l'invention permet d'obtenir, par inversion un modèle optimisé d'une grandeur physique représentative d'un milieu hétérogène stratifié, (l'impédance présentée par ce milieu relativement à des ondes qui s'y propagent, par exemple) par une caractérisation plus quantitative de paramètres d'inversion (écart-type et longueur de corrélation par exemple), qui soit cohérente avec la structure des données observées ou mesurées dans le milieu. En précisant l'interdépendance de ces paramètres, elle a pour avantage de guider l'interprétateur dans la sélection des valeurs à prendre en compte pour les paramètres. Le modèle qui en résulte est amélioré par rapport à celui que l'on obtient par un choix purement heuristique.

La méthode comporte la construction d'un modèle a priori par krigeage à partir de données connues obtenues par des mesures, des enregistrements ou des observations en un certain nombre de points de référence du milieu, les incertitudes sur les valeurs de la grandeur physique dans le modèle a priori par rapport aux valeurs correspondantes dans le milieu, en tous points le long des directions des strates, étant décrites par un modèle de covariance stationnaire ($C_Z$) dépendant d'un vecteur d'écart entre les points, et la construction d'un modèle optimisé par inversion, en minimisant itérativement une fonction-coût dépendant des écarts entre le modèle courant et les données connues, compte-tenu du modèle a priori. Elle est caractérisée en ce que l'on détermine les paramètres d'inversion en se servant d'un modèle de covariance rendu stationnaire obtenu en tenant compte d'un terme correctif non stationnaire prédominant au voisinage des dits points de référence qui dépend de la position des points et de leurs distances respectives ($\vec{h}$).

Suivant un mode de mise en oeuvre, la méthode comporte la détermination d'une covariance moyenne que l'on ajuste sur un modèle de covariance exponentielle stationnaire, pour définir les paramètres d'inversion.

Suivant un deuxième mode de mise en oeuvre, on ajuste en tous points le terme de covariance ($C\varepsilon$) sur un modèle exponentiel stationnaire pour obtenir des valeurs locales ($\lambda_x$, $\sigma_x$).des paramètres d'inversion.

**Figures**

D'autres caractéristiques et avantages de la méthode selon l'invention, apparaîtront à la lecture de la description ci-après d'un mode de réalisation donné à titre d'exemple non limitatif, en se référant aux dessins annexés où :

- les Fig.1A, 1B représentent deux grilles de covariance de l'erreur de krigeage dans un plan de corrélation autour de trois puits W1, W2, W3, correspondant respectivement à deux vecteurs $\vec{h}$ de distance différents, qui illustrent le caractère non stationnaire de la covariance des incertitudes ;

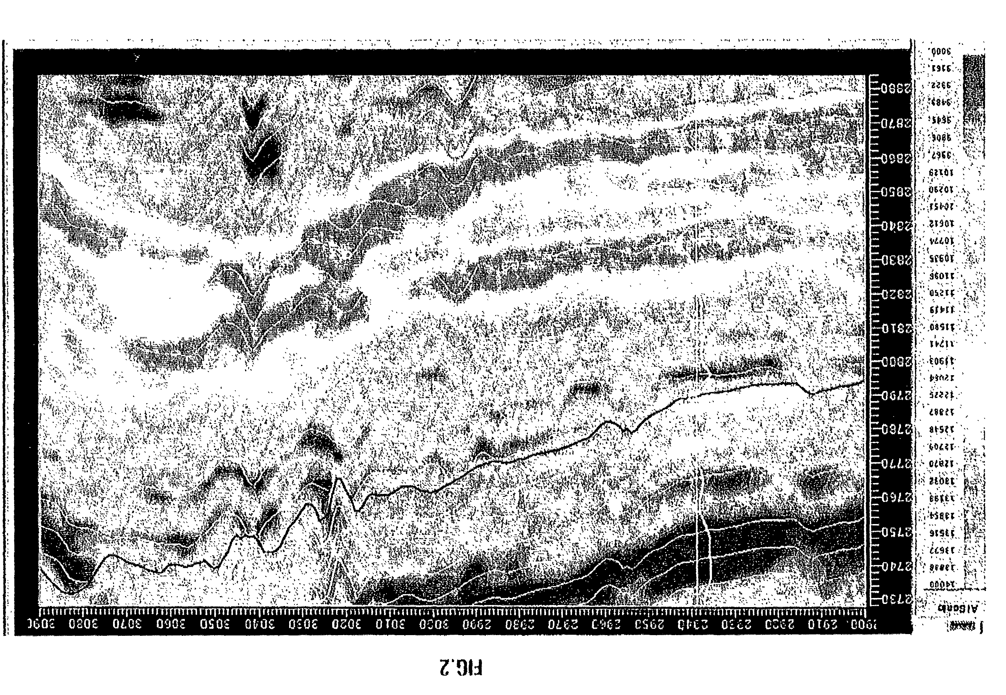

- la Fig.2 montre un exemple de modèle d'impédance obtenu avec des paramètres d'inversion usuels ; et

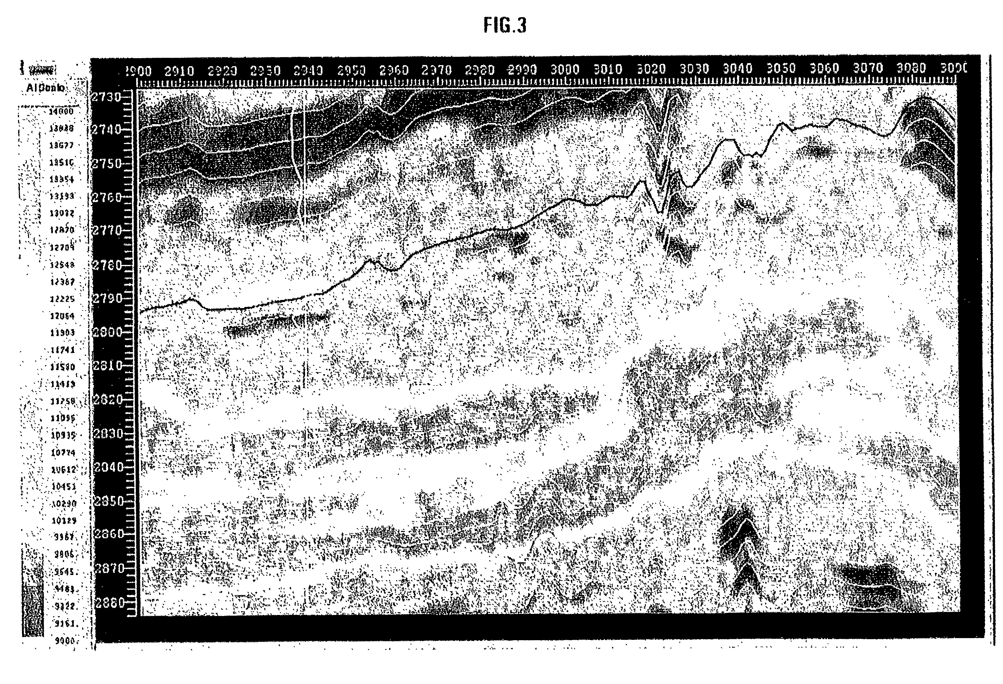

- la Fig.3 montre un exemple de modèle d'impédance obtenu par la méthode selon l'invention, avec des paramètres d'inversion mieux ajustés au comportement de la covariance de l'incertitude.

**Description détaillée**

Comme le modèle a priori est construit par krigeage, on a étudié la covariance théorique des erreurs de krigeage qui doivent en principe commander le poids du terme géologique Fg. Dans le cas d'un krigeage ordinaire, si Z désigne le champ d'impédance, et si $Z_{a\,priori}$

est le champ d'impédance krigé Z*, alors l'erreur a pour expression :

$$\varepsilon(x) = Z(x) - Z^*(x).$$

Si x et y désignent deux points du milieu distants de h, la covariance $C_\varepsilon(x,y)$ de l'erreur $\varepsilon(x)$ s'exprime alors par :

$$C_\varepsilon(x,y)= C_z(\vec{h}) - {}^t\beta(x)K\beta(x + \vec{h})$$

où K est la matrice de krigeage, $\beta(x)$ et $\beta(x + \vec{h})$ sont les pondérations de krigeage respectivement aux abscisses x et x + $\vec{h}$, $\vec{h}$ étant le vecteur de distance de x à y et ${}^t\beta$, le transposé de la pondération $\beta$.

La covariance théorique de l'erreur $C_\varepsilon$ (x, y) entre deux points x et y apparaît comme la covariance initiale $C_z(\vec{h})$ de krigeage permettant la construction du modèle a priori, covariance qui est le plus souvent isotrope et ne dépend que de la distance ou écart $\vec{h}$, modifiée par un terme non stationnaire ${}^t\beta(x)K\beta(x+\vec{h})$ qui lui, dépend à la fois de la distance $\vec{h}$ et de la position du point x considéré. Loin de tout puits, la covariance initiale $C_z(\vec{h})$ prédomine alors que le second terme prend une importance grandissante au fur et à mesure que l'on se rapproche d'un puits quelconque.

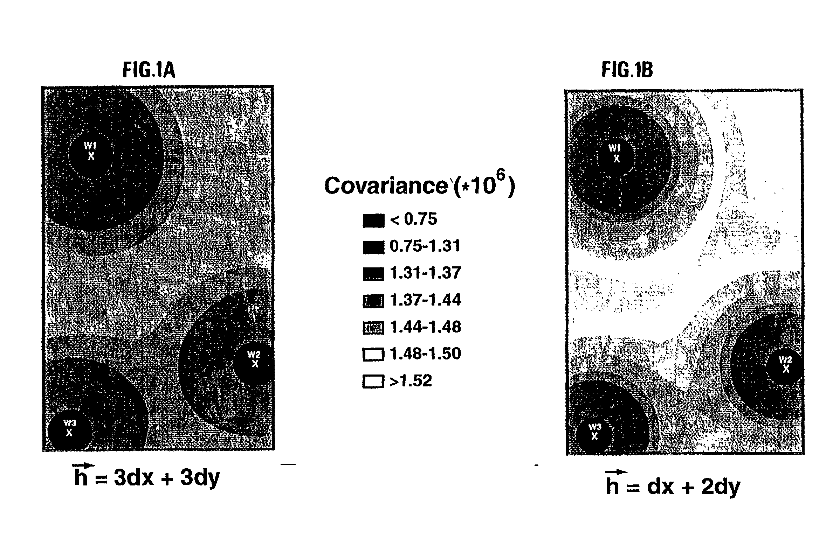

Ce comportement est illustré par un exemple sur un champ réel avec trois puits verticaux. Pour l'unité stratigraphique du réservoir, les impédances ont été krigées le long de surfaces parallèles à sa base avec un modèle exponentiel commun (longueur de corrélation 750m, écart-type sur l'impédance égal à 1122g/cm$^3$.m/ s). La covariance des erreurs associées est calculée pour deux vecteurs de distance, comme on le voit sur les Fig. 1A, 1B.

La méthode comporte le choix de paramètres d'inversion compatibles quantitativement avec les données disponibles intégrées dans le processus d'inversion. L'approche la plus simple, qui ne demande aucune modification de l'algorithme d'inversion, consiste à calculer une covariance moyenne d'erreur $\bar{C}_\varepsilon = \iint C_\varepsilon$ qui sert à ajuster une covariance exponentielle stationnaire x v (d'un type connu des spécialistes) pour obtenir automatiquement les paramètres moyens d'inversion $\lambda = \bar\lambda$ et $\sigma = \bar\sigma$.

Une autre approche consiste à réaliser en tout point un ajustement local en calculant le terme correctif ${}^t\beta(x)K\beta(x+\vec{h})$ approprié pour la position x de ce point, qu'il faut ajouter au terme stationnaire $C_z(\vec{h})$, et à déterminer les paramètres d'inversion locaux $\lambda = \lambda_x$, $\sigma = \sigma_x$, en approchant la covariance locale par une covariance exponentielle stationnaire.

La méthode permet donc facilement à l'interprétateur, d'exploiter le comportement spatial de l'erreur de krigeage pour régler le poids à accorder au terme géologique Fg.

Dans l'exemple qui a été décrit ci-dessus, la méthode a été appliquée à la modélisation de l'impédance d'une formation relativement à des ondes qui s'y propagent: ondes élastiques, ondes électromagnétiques etc. Il est bien évident qu'elle peut s'appliquer aussi bien à la modélisation d'autres grandeurs physiques de la formation : porosité, perméabilité, saturation etc., ou relatives à des essais de puits. D'une manière plus générale, la méthode peut s'appliquer à tous les modèles d'inversion de type bayesien bien connu des spécialistes.

## Revendications

1. Méthode pour obtenir par inversion un modèle optimisé d'une grandeur physique représentative d'un milieu hétérogène stratifié, comportant la construction d'un modèle a priori par krigeage à partir de données connues obtenues par des mesures, des enregistrements ou des observations en un certain nombre de points de référence du milieu, les incertitudes sur les valeurs de la grandeur physique dans le modèle a priori par rapport aux valeurs correspondantes dans le milieu, en tous points le long des directions des strates, étant décrites par un modèle de covariance stationnaire ($C_z$) dépendant d'un vecteur d'écart ($\vec{h}$) entre les points, et la construction d'un modèle optimisé par inversion, en minimisant itérativement une fonction-coût dépendant des écarts entre le modèle courant et les données connues, compte-tenu du modèle a priori, **caractérisée en ce que** l'on détermine les paramètres d'inversion ($\lambda$, $\sigma$) en se servant d'un modèle de covariance rendu stationnaire obtenu en tenant compte d'un terme correctif non stationnaire prédominant au voisinage des dits points de référence qui dépend de la position des points (x) et de leurs distances respectives ($\vec{h}$).

2. Méthode selon la revendication 1, **caractérisée en ce que** l'on sélectionne les paramètres d'inversion ($\lambda$, $\sigma$) de façon consistente avec un modèle de covariance d'erreur défini par :

$$C_\varepsilon \,(x,\, y) = C_z \,(\vec{h}) - {}^t\beta(x) K \beta(x + \vec{h})$$

où x et y désignent deux points quelconques du milieu distants de $\vec{h}$, K est une matrice de krigeage, $\beta(x)$ et $\beta(x + \vec{h})$ sont des pondérations de krigeage respectivement aux abscisses x et x + $\vec{h}$, et $\vec{h}$ est le vecteur d'écart entre les deux points.

3. Méthode selon la revendication 1 ou 2, **caractérisée en ce que** qu'elle comporte la détermination d'une covariance moyenne ($\overline{C}_\varepsilon$) que l'on ajuste sur un modèle de covariance exponentielle stationnaire, pour définir les paramètres d'inversion ($\lambda$, $\sigma$).

4. Méthode selon la revendication 1 ou 2, **caractérisée en ce qu'**elle comporte en tous points, un ajustement de la covariance (C$\varepsilon$) sur un modèle exponentiel stationnaire pour définir des valeurs locales des paramètres d'inversion ($\lambda_x$, $\sigma_x$).

## Patentansprüche

1. Verfahren zum erhalt eines optimierten Modells einer physikalischen Größe durch Inversion, das repräsentativ für ein heterogenes geschichtetes Milieu ist, umfassend die Konstruktion eines vorläufigen Modells durch Kriging (Krigen) ausgehend von bekannten Daten, die durch Messungen, Aufzeichnungen oder Beobachtungen bei einer bestimmten Anzahl von Referenzpunkten des Milieus erhalten werden, wobei die Unsicherheiten bei den Werten der physikalischen Größe in dem vorläufigen Modell im Verhältnis zu den entsprechenden Werten in dem Milieu an allen Punkten entlang der Richtungen der Schichten durch ein stationäres Co-Varianzsystem (Cz) beschrieben werden, das von einem Vektor von einer Differenz ($\vec{h}$) zwischen den Punkten abhängt, und die Konstruktion eines optimierten Modells durch Inversion unter iterativer Minimierung einer Straffunktion, die von den Differenzen zwischen dem taufenden Modell und en bekannten Daten unter Berücksichtigung des vorläufigen Modells abhängt, **dadurch gekennzeichnet, dass** man die Inversionsparameter ($\lambda$, $\sigma$) bestimmt, indem man sich eines stationär gemachten Co-Varianzmodells bedient, das unter Berücksichtigung eines in der Nähe der Referenzpunkte vorherrschenden nicht stationären Korrekturausdrucks bedient, der von der Position der Punkte (x) und deren jeweiligen Abständen ($\vec{h}$) abhängt.

2. Verfahren nach Anspruch 1, **dadurch gekennzeichnet, dass** man die Inversionsparameter ($\lambda$, $\sigma$) in konsistent mit einem Fehler-Co-Varianzmodell auswählt, das definiert ist durch:

$$C_\varepsilon(x,y) = c_z(\vec{h}) - {}^t\beta(x) K \beta(x + \vec{h})$$

wobei x und y zwei beliebige Punkte des Milieus bezeichnen, die von ($\vec{h}$), K entfernt sind, K eine Krigingmatrix (Krigenmatrix) ist, $\beta(x)$ und $\beta(x+\vec{h})$ Kriginggewichtungen (Krigengewichtungen) bezüglich der Abszissen x und x+$\vec{h}$ sind und (h) ein Vektor von einer Differenz zwischen den beiden Punkten ist.

3. Verfahren nach einem der Ansprüche 1 oder 2, dadurch h **gekennzeichnet**, dass es die Bestimmung einer mittleren Co-Varianz ($\overline{C}_\varepsilon$) umfasst, die man bei einem stationären exponentiellen Modell einstellt, um die Inversionsparameter ($\lambda$, $\sigma$) zu definieren.

4. Verfahren nach einem der Ansprüche 1 oder 2, **dadurch gekennzeichnet, dass** es an allen Punkten eine Einstellung der Co-Varianz (C$\varepsilon$) auf einem stationären exponentiellen Modell umfasst, um lokale Werte der Inversionsparameter ($\lambda_x$, $\sigma_x$) zu definieren.

**Claims**

1. Method for obtainment by inversion of an optimised model of a physical amplitude representative of a stratified heterogeneous medium, including the construction of an a priori model by kriging from known data obtained by measurements, recordings, or observations at a certain number of reference points in the medium, the uncertainties of the values of the physical amplitude in the a priori model relative to the corresponding values in the medium, at all points along the directions of the strata, being described by a stationary covariance model C$_z$ depending on a distance vector ($\vec{h}$) between the points, and the construction of a model optimised by inversion, iteratively minimising a cost function dependent on the deviations between the current model and the known data, taking into account the a priori model, *characterised by the fact* that the inversion parameters ($\lambda$, $\sigma$) are determined using a covariance model made stationary obtained taking into account a predominant non-stationary corrective term in the vicinity of the said reference points which depends on the position of the points (x) and on their respective distances ($\vec{h}$).

2. Method as described in claim 1, *characterised by the fact* that the inversion parameters ($\lambda$, $\sigma$) are selected in a manner consistent with an error covariance model defined by:

$$C_\varepsilon(x, y) = C_z(\vec{h}) - {}^t\beta(x)K\beta(x + \vec{h})$$

in which x and y designate any two points in the medium distant by $\vec{h}$, K is a kriging matrix, $\beta$(x) and $\beta$(x+$\vec{h}$) are kriging weightings at the abscissae x and x+$\vec{h}$ respectively, and $\vec{h}$ is the distance vector between the two points.

3. Method as described in claim 1 or 2, *characterised by the fact* that it includes the determination of a mean covariance ($\overline{C}_\varepsilon$) which is adjusted in a stationary exponential covariance model, to define the inversion parameters ($\lambda$, $\sigma$).

4. Method as described in claim 1 or 2, *characterised by the* fact *that* it includes at all points an adjustment of the covariance (C$\varepsilon$) in a stationary exponential model to define the local values of the inversion parameters ($\lambda_x$, $\sigma_x$)

FIG.1A

FIG.1B

Covariance $(*10^6)$

- $< 0.75$
- $0.75\text{-}1.31$
- $1.31\text{-}1.37$
- $1.37\text{-}1.44$
- $1.44\text{-}1.48$
- $1.48\text{-}1.50$
- $>1.52$

$\vec{h} = 3dx + 3dy$

$\vec{h} = dx + 2dy$

EP 1 045 259 B1

FIG.2

FIG.3